(19) Europäisches Patentamt / European Patent Office / Office européen des brevets

(11) **EP 3 386 018 A1**

(12) **EUROPEAN PATENT APPLICATION**
published in accordance with Art. 153(4) EPC

(43) Date of publication:
**10.10.2018 Bulletin 2018/41**

(51) Int Cl.:
**H01M 10/04** (2006.01)  **H01M 2/02** (2006.01)
**H01M 2/10** (2006.01)  **H01M 2/30** (2006.01)
**H01M 10/0587** (2010.01)

(21) Application number: **17736023.7**

(22) Date of filing: **06.01.2017**

(86) International application number:
**PCT/JP2017/000280**

(87) International publication number:
**WO 2017/119486 (13.07.2017 Gazette 2017/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **06.01.2016  JP 2016001407**

(71) Applicant: **Murata Manufacturing Co., Ltd.**
**Nagaokakyo-shi, Kyoto 617-8555 (JP)**

(72) Inventors:
• **HORIKOSHI, Yoshiichi**
  **Koriyama-shi**
  **Fukushima 963-0531 (JP)**
• **TANJI, Yusuke**
  **Koriyama-shi**
  **Fukushima 963-0531 (JP)**
• **WATANABE, Yumi**
  **Koriyama-shi**
  **Fukushima 963-0531 (JP)**

(74) Representative: **Witte, Weller & Partner**
**Patentanwälte mbB**
**Postfach 10 54 62**
**70047 Stuttgart (DE)**

(54) **BATTERY, METHOD FOR MANUFACTURING SAME, BATTERY PACK, AND ELECTRONIC DEVICE**

(57)　A battery includes: an electrode body having a substantially cylindrical shape; and an outer package member having a film shape and including: a housing portion that has a substantially cylindrical shape and houses the electrode body; and seal portions that are provided on three sides of a periphery of the housing portion excluding a folded portion provided on a peripheral surface side, where one of the seal portions provided on an end surface side of the housing portion is displaced from a center position of an end surface.

FIG. 1

## Description

TECHNICAL FIELD

The present technology relates to a battery including an outer package member having a film shape, a method of manufacturing the battery, an assembled battery, and an electronic device.

BACKGROUND ART

In recent years, a circuit member having a protective circuit element or the like has often been provided in a battery from the viewpoint of improving the safety of the battery. In particular, it is common that the circuit member as described above is provided in a secondary battery that can be repeatedly charged and used.

Mobile phones, portable players, and personal digital assistants (PDAs) often use a battery in which the electrode body is configured to be sealed by folding the outer package member in half and sealing the three sides of the material except for the bent portion, and the seal portion is used as a storage space of the circuit member (see, for example, Patent Document 1).

As a battery that can also be used as a wearable device, a cylindrical film outer package battery that is lighter than a battery using a conventional metal outer package can is proposed (see, for example, Patent Document 2).

PRIOR ART DOCUMENTS

PATENT DOCUMENTS

   Patent Document 1: Japanese Patent Application Laid-Open No. 11-297280
   Patent Document 2: Japanese Patent Application Laid-Open No. 2015-115293

SUMMARY OF THE INVENTION

Problem to be solved by the invention

However, in the above-described cylindrical film outer package battery, the storage space of the circuit member cannot be sufficiently secured, and thus the volumetric efficiency of the entire battery including the circuit member is low.

An object of the present technology is to provide a battery capable of improving volumetric efficiency, a method of manufacturing the battery, an assembled battery, and an electronic device.

Means for solving the problem

In order to solve the above problems, the first technology is to provide a battery including: an electrode body having a substantially cylindrical shape; and an outer package member having a film shape and including: a housing portion that has a substantially cylindrical shape and houses the electrode body; and seal portions that are provided on three sides of a periphery of the housing portion excluding a folded portion provided on a peripheral surface side, where one of the seal portions provided on an end surface side of the housing portion is displaced from a center position of an end surface.

The second technology is to provide an assembled battery including a plurality of the batteries of the first technology that are connected to each other.

The third technology is to provide an electronic device including the battery of the first technology.

The fourth technology is a method of manufacturing a battery including: forming first and second housing portions having a substantially partial cylindrical shape and different depths extending in a same direction and arranged in a direction perpendicular to an extending direction on an outer package member having a film shape; folding back the outer package member between the first and second housing portions and housing an electrode body having a substantially cylindrical shape in the first and second housing portions; and sealing three sides of a periphery of a housing portion including the first and second housing portions excluding a folded portion provided on a peripheral surface side.

Advantageous effect of the invention

As described above, according to the present technology, it is possible to improve the volumetric efficiency of the battery.

BRIEF EXPLANATION OF DRAWINGS

   FIGS. 1A and 1B are perspective views illustrating an example of the appearance of a battery according to a first embodiment of the present technology. FIG. 1C is a front view illustrating an example of the appearance of the battery according to the first embodiment of the present technology.
   FIG. 2 is an exploded perspective view illustrating an example of the configuration of the battery according to the first embodiment of the present technology.
   FIG. 3A is a perspective view illustrating an example of the appearance of a battery according to a modified example of the first embodiment of the present technology.
   FIG. 3B is a front view illustrating an example of the appearance of the battery according to the modified example of the first embodiment of the present technology.
   FIG. 4 is a schematic cross-sectional view illustrating an example of the configuration of an outer package member.

FIG. 5 is a schematic cross-sectional view illustrating an example of the configuration of a deep drawing machine according to the first embodiment of the present technology.

FIGS. 6A, 6B, 6C, and 6D are process diagrams for explaining an example of a method of manufacturing the battery according to the first embodiment of the present technology.

FIGS. 7A, 7B, and 7C are process diagrams for explaining an example of the method of manufacturing the battery according to the first embodiment of the present technology.

FIG. 8 is a schematic cross-sectional view illustrating an example of the configuration of a deep drawing machine according to a modified example of the first embodiment of the present technology.

FIG. 9A is a perspective view illustrating an example of the appearance of a battery according to a second embodiment of the present technology. FIG. 9B is a side view illustrating an example of the appearance of the battery according to the second embodiment of the present technology. FIG. 9C is a rear view illustrating an example of the appearance of the battery according to the second embodiment of the present technology.

FIG. 10 is a side view illustrating an example of the appearance of a battery according to a reference example.

FIGS. 11A and 11B are perspective views illustrating an example of the appearance of a battery according to a modified example of the second embodiment of the present technology.

FIG. 12 is a side view illustrating an example of the appearance of the battery according to the modified example of the second embodiment of the present technology.

FIG. 13A is a side view illustrating an example of the appearance of a first assembled battery according to a third embodiment of the present technology. FIG. 13B is a side view illustrating an example of the appearance of a second assembled battery according to the third embodiment of the present technology.

FIG. 14A is a side view illustrating an example of the appearance of a third assembled battery according to the third embodiment of the present technology. FIG. 14B is a side view illustrating an example of the appearance of a fourth assembled battery according to the third embodiment of the present technology.

FIG. 15A is a side view illustrating an example of the appearance of the first assembled battery according to Reference Example 1. FIG. 15B is a side view illustrating an example of the appearance of the second assembled battery according to Reference Example 2.

FIG. 16A is a side view illustrating an example of the appearance of the third assembled battery according to Reference Example 3. FIG. 16B is a side view illustrating an example of the appearance of the fourth assembled battery according to Reference Example 4.

FIG. 17 is a block diagram illustrating an example of the configuration of an electronic device according to a fourth embodiment of the present technology.

MODE FOR CARRYING OUT THE INVENTION

Embodiments of the present technology will be described in the following order:

1. First Embodiment (Example of Battery)

    1.1 Configuration of Battery
    1.2 Deep Drawing Machine
    1.3 Method of Manufacturing Battery
    1.4 Effect
    1.5 Modified Example

2. Second Embodiment (Example of Battery)

    2.1 Configuration of Battery
    2.2 Effect
    2.3 Modified Example

3. Third Embodiment (Example of Assembled Battery)

    3.1 Configuration of Assembled Battery
    3.2 Modified Example

4. Fourth Embodiment (Example of Electronic Device)

    4.1 Configuration of Electronic Device
    4.2 Modified Example

<1. First Embodiment>

[1.1 Configuration of Battery]

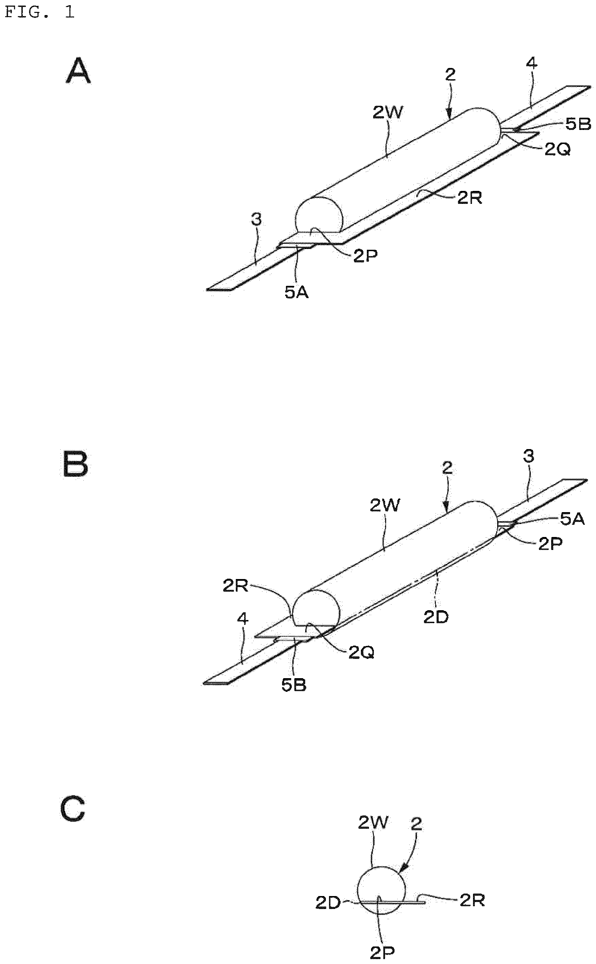

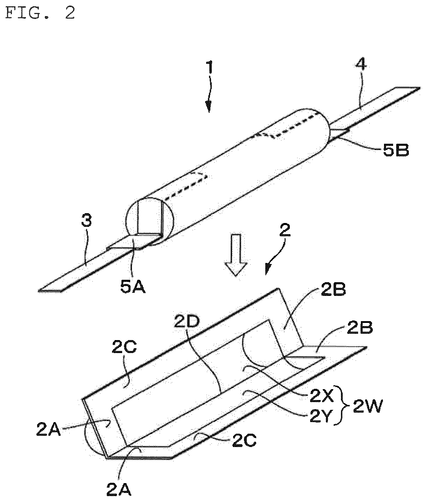

FIGS. 1A, 1B, and 1C illustrate an example of the appearance of a battery according to a first embodiment of the present technology. FIG. 2 illustrates an example of the configuration of the battery according to the first embodiment of the present technology. The film outer package battery (hereinafter simply referred to as "battery") according to the first embodiment of the present technology is a so-called lithium ion secondary battery, and includes a substantially cylindrical wound electrode body (hereinafter simply referred to as "electrode body") 1, a substantially cylindrical housing portion 2W for housing the electrode body 1, an outer package member 2 having a film shape and including seal portions 2P, 2Q, and 2R that are provided on three sides of the periphery of the housing portion 2W excluding a folded portion 2D on a peripheral surface side, and a positive electrode lead 3 and a negative electrode lead 4 that are connected to the electrode body 1.

The seal portions 2P and 2Q are provided on both end surface sides of the housing portion 2W, and the seal portion 2R is provided on the peripheral surface side of the housing portion 2W. The seal portions 2P and 2Q are provided so as to be displaced from the center of the substantially circular end surface of the housing portion 2W and to stand substantially perpendicularly to the end surface.

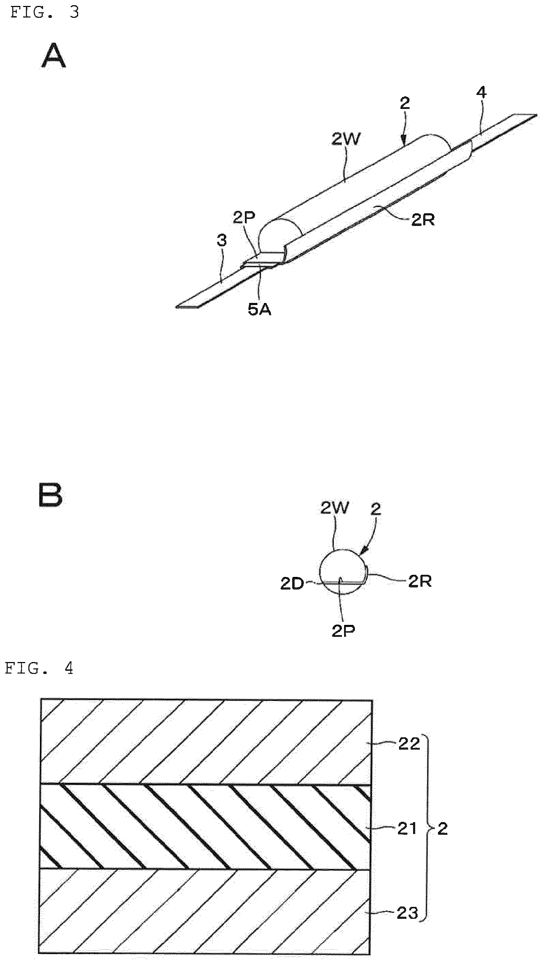

As illustrated in FIGS. 2A and 2C, the seal portion 2R may stand substantially perpendicularly to the substantially cylindrical peripheral surface of the housing portion 2W, or as illustrated in FIGS. 3A and 3B, the seal portion 2R may be bent so as to follow the substantially cylindrical peripheral surface of the housing portion 2W, but the seal portion 2R is preferably bent like the latter. This is because the shape of the peripheral surface of the battery can be made closer to a cylindrical surface and the entire battery can be made more compact.

(Positive Electrode, Negative Electrode Lead)

One end of the positive electrode lead 3 is electrically connected to the positive electrode of the electrode body 1, and the other end of the positive electrode lead 3 is led out to the outside of the outer package member 2 through the seal portion 2P. Further, one end of the negative electrode lead 4 is electrically connected to the negative electrode of the electrode body 1, and the other end of the negative electrode lead 4 is led out to the outside of the outer package member 2 through the seal portion 2Q.

Preferably, a sealant material 5A such as a thermal fusion material is provided between the positive electrode lead 3 and the outer package member 2. Preferably, the sealant material 5B such as the thermal fusion material is provided between the negative electrode lead 4 and the outer package member 2. Thus, it is possible to improve the adhesiveness between the positive electrode lead 3 and the negative electrode lead 4 that are led out from the outer package member 2 and the inner surface of the outer package member 2.

It is to be noted that the connection position between the positive electrode lead 3 and the electrode body 1 and the connection position between the negative electrode lead 4 and the electrode body 1 are not particularly limited, and may be any of the inner, middle, and outer peripheral portions of the electrode body 1. When both the positive electrode lead 3 and the negative electrode lead 4 are connected to the outer peripheral portions of the electrode body 1, preferably, the connection positions thereof face to each other on the peripheral surface of the electrode body 1. This is because the shape of the peripheral surface of the electrode body 1 can be made closer to the cylindrical surface.

The positive electrode lead 3 and the negative electrode lead 4 are preferably bent in an L shape so as to be along the end surface of the electrode body 1. This is because the volumetric efficiency of the housing portion 2W can be increased. The positive electrode lead 3 and the negative electrode lead 4 are led out to the outside of the outer package member 2, but may be extended straight, or may be folded back toward the end surface of the housing portion 2W.

Each of the positive electrode lead 3 and the negative electrode lead 4 is made of a metal material such as aluminum, copper, nickel, or stainless steel, and has a thin plate shape, a stitch shape, or the like. Each of the sealant materials 5A and 5B is made of a material having adhesiveness to the positive electrode lead 3 and the negative electrode lead 4 (e.g., a polyolefin resin such as polyethylene, polypropylene, modified polyethylene, or modified polypropylene).

(Outer Package Member)

As illustrated in FIG. 2, the outer package member 2 includes two substantially partial cylindrical housing portions 2X and 2Y having different depths extending in the same direction and arranged in a direction perpendicular to the extending direction, and peripheral portions 2A, 2B, and 2C provided on three sides including both the end surface sides and the peripheral surface side (side surface side) of the housing portions 2X and 2Y. Here, the term "substantially partial cylindrical" means a shape obtained by cutting and dividing a substantially cylindrical shape in its axial direction into two. The substantially partial cylindrical shape of the housing portion 2X is one of the two divided shapes as described above, and the substantially partial cylindrical shape of the housing portion 2Y is the other of the two divided shapes as described above.

The outer package member 2 is folded back at the folded portion 2D between the adjacent housing portions 2X and 2Y, the peripheral portions 2A, 2B and 2C of the housing portions 2X and 2Y are overlapped with each other, and the housing portions 2X and 2Y are combined together. The overlapped peripheral portions 2A, 2B, and 2C are sealed by thermal fusion or the like to form seal portions 2P, 2Q, and 2R. The substantially cylindrical housing portion 2W is formed by the combined substantially partial cylindrical housing portions 2X and 2Y.

As illustrated in FIGS. 1B and 1C, preferably, the folded portion 2D is provided so as not to protrude from the peripheral surface of the housing portion 2W. This is because the shape of the peripheral surface of the battery can be made closer to the cylindrical surface. Here, it is assumed that wrinkles of the outer package member 2 are excluded from the term "protrude". The seal portion 2R is preferably bent so as to follow the substantially cylindrical peripheral surface of the housing portion 2W as described above. In this case, the seal portion 2R may be bent so as to follow the substantially partial cylindrical peripheral surface of the housing portion 2X, may be bent so as to follow the substantially partial cylindrical peripheral surface of the housing portion 2Y, and is preferably bent so as to follow the substantially partial cylindrical peripheral surface of the housing portion 2Y having a shallower depth.

The outer package member 2 has plasticity. The outer package member 2 is a so-called laminated film, and as illustrated in FIG. 4, includes a metal layer 21, a surface protective layer 22 provided on one surface of the metal layer 21, and a thermal fusion layer 23 provided on the other surface of the metal layer 21. The outer package member 2 may further include an adhesion layer at one or both of the space between the surface protective layer 22 and the metal layer 21 and the space between the thermal fusion layer 23 and the metal layer 21. It is to be noted that, of the both surfaces of the outer package member 2, the surface on the side of the surface protective layer 22 corresponds to an outer surface (hereinafter referred to as "outer surface of the outer package member 2"), and the surface on the side of the thermal fusion layer 23 corresponds to an inner surface for housing the electrode body 1 (hereinafter referred to as "inner surface of the outer package member 2")

The metal layer 21 plays a role in preventing entry of moisture or the like and protecting the electrode body 1 that is a storage product. As the material of the metal layer 21, for example, a metal foil made of aluminum, aluminum alloy, or the like is used. As the material of the surface protective layer 22, for example, nylon, polyethylene terephthalate, or the like is used from the viewpoint of toughness, flexibility, and the like. As a material of the thermal fusion layer 23, for example, a polyolefin resin such as polyethylene, polypropylene, modified polyethylene, or modified polypropylene is used from the viewpoint of flexibility and prevention of entry of moisture or the like. As a material of the adhesion layer, for example, an acrylic adhesive, a polyester adhesive, a polyurethane adhesive, or the like is used. It is to be noted that from the viewpoint of beauty of appearance and the like, the outer package member 2 may further include a coloring layer, or a colorant may be contained in at least one layer of the surface protective layer 22, the thermal fusion layer 23, and the adhesion layer.

(Electrode Body)

The electrode body 1 has a positive electrode having a long rectangular shape, a negative electrode, and a separator, and has a wound structure in which the positive electrode and the negative electrode are wound with the separator interposed therebetween in a longitudinal direction thereof. The positive electrode includes, for example, a metal foil such as aluminum as a positive electrode current collector, and includes a positive electrode active material layer having a positive electrode active material on both sides thereof. The negative electrode includes, for example, a metal foil such as copper as a negative electrode current collector, and includes a negative electrode active material layer having a negative electrode active material on both sides thereof. It is to be noted that nickel, stainless steel, or the like can also be used as the material of the positive electrode current collector and the negative electrode current collector.

(Positive Electrode Active Material)

The positive electrode active material is a positive electrode material capable of occluding and releasing lithium. For example, a lithium-containing compound such as lithium oxide, lithium phosphorus oxide, lithium sulfide, or an interlayer compound containing lithium is suitable, and two or more of these compounds may be mixed and used. In order to increase the energy density, a lithium-containing compound having lithium, a transition metal element, and oxygen is preferred. Examples of the lithium-containing compound include a lithium transition metal composite oxide having a layered rock salt type structure, and a lithium composite phosphate having an olivine type structure. The lithium-containing compound preferably contains at least one selected from the group consisting of cobalt, nickel, manganese, and iron as the transition metal element. Other examples of the positive electrode material capable of occluding and releasing lithium include inorganic compounds containing no lithium such as $MnO_2$, $V_2O_5$, $V_6O_{13}$, NiS, and MoS.

(Negative Electrode Active Material)

The negative electrode active material is a negative electrode material capable of occluding and releasing lithium, and examples thereof include non-graphitizable carbon, graphitizable carbon, graphite, pyrolytic carbons, cokes, glassy carbons, organic polymer compound fired bodies, and carbon materials such as carbon fiber or activated carbon. Preferably, as the graphite, natural graphite subjected to a spheroidizing treatment or the like, or substantially spherical artificial graphite or the like is used. As the artificial graphite, artificial graphite obtained by graphitizing mesocarbon microbeads (MCMBs), artificial graphite obtained by graphitizing or pulverizing a coke raw material and the like are preferred. Examples of cokes include pitch cokes, needle cokes, and petroleum cokes. The term "organic polymer compound fired body" means a fired body obtained by firing a polymer material such as a phenol resin or a furan resin at an appropriate temperature and carbonizing the resultant material, and some of the fired bodies are classified into non-graphitizable carbon or graphitizable carbon. The polymer material may be, for example, polyacetylene or polypyrrole. These carbon materials are preferred because very little change occurs in the crystal structure generated during charging/discharging, a high charge/discharge capacity can be obtained, and good cycle characteristics can be obtained.

Further, examples of the negative electrode material capable of occluding and releasing lithium include materials containing at least one of a metal element and a metalloid element as a constituent element. The negative electrode material may be a simple substance, alloy, or compound of the metal element or the metalloid element, or may be a mixture or composite of these elements. Further, each of these materials may be a solid solution, a eutectic solution (co-dissolved mixture), an intermetallic compound, or a mixture of two or more thereof. Examples of the metal element and metalloid element include magnesium, boron, aluminum, gallium, indium, silicon, germanium, tin, lead, bismuth, cadmium, silver, zinc, hafnium, zirconium, yttrium, palladium, and platinum. These metal and metalloid elements may be crystalline or amorphous. Above all, those containing a metal element or a metalloid element of Group 4B in the short period periodic table as constituent elements are preferred, and particularly those containing at least one of silicon and tin as a constituent element are preferred. This is because silicon and tin have a large capability capable of occluding and releasing lithium, and can obtain a high energy density.

(Separator)

The separator allows lithium ions to pass therethrough while preventing current short circuit due to the contact between the positive and negative electrodes, and is, for example, a porous film made of synthetic resin consisting of polyethylene, polypropylene, polytetrafluoroethylene, a mixture or copolymer thereof or the like, or a porous film made of ceramic, and may be a laminate of two or more of these porous films. Above all, a porous film made of polyolefin is preferred because of having an excellent short circuit prevention effect and intending to improve the safety of the battery due to the shutdown effect at high temperature, and particularly a porous film made of polyethylene is preferred.

(Electrolytic Solution)

The electrode body 1 contains a nonaqueous electrolytic solution. It is to be noted that an electrolyte layer containing a nonaqueous electrolytic solution and a polymer compound retaining the nonaqueous electrolytic solution together with the separator may be provided between the positive and negative electrodes. In this case, the electrolyte layer may be used instead of the separator, and the separator may not be provided.
The nonaqueous electrolytic solution contains a solvent and an electrolyte salt. It is to be noted that the nonaqueous electrolytic solution may further contain known additives in order to improve battery characteristics.

Examples of the solvent include ethylene carbonate, propylene carbonate, butylene carbonate, vinylene carbonate, dimethyl carbonate, diethyl carbonate, ethyl methyl carbonate, 4-fluoro-1,3-dioxolan-2-one, $\gamma$-butyrolactone, $\gamma$-valerolactone, 1,2-dimethoxyethane, tetrahydrofuran, 2-methyltetrahydrofuran, 1,3-dioxolane, 4-methyl-1,3-dioxolane, methyl acetate, ethyl acetate, methyl propionate, ethyl propionate, propyl propionate, acetonitrile, succinonitrile, adiponitrile, methoxyacetonitrile, 3-methoxypropionitrile, N,N-dimethylformamide, N-methylpyrrolidinone, N-methyl oxazolicinone, nitromethane, nitroethane, sulfolane, dimethylsulfoxide, trimethyl phosphate, triethyl phosphate, and ethylene sulfide. Above all, at least one of the group consisting of 4-fluoro-1,3-dioxolane-2-one, ethylene carbonate, propylene carbonate, vinylene carbonate, dimethyl carbonate, and ethyl methyl carbonate is mixed and used, whereby excellent charge/discharge capacity characteristics and charge/discharge cycle characteristics can be obtained.

The electrolyte salt contains one or more lithium salts. Examples of the lithium salt include lithium hexafluorophosphate, lithium tetrafluoroborate, lithium hexafluoroarsenate, lithium perchlorate, lithium trifluoromethanesulfonate, lithium bis(trifluoromethanesulfonyl)imide, lithium bis(pentafluoroethanesulfonyl)imide, lithium tris(trifluoromethanesulfonyl)methyl, lithium chloride, and lithium bromide.

Examples of the polymer compound include polyacrylonitrile, polyvinylidene fluoride, a copolymer of vinylidene fluoride and hexafluoropropylene, polytetrafluoroethylene, polyhexafluoropropylene, polyethylene oxide, polypropylene oxide, polyphosphazene, polysiloxane, polyvinyl acetate, polyvinyl alcohol, polyacrylic acid, polymethacrylic acid, polymethylmethacrylate, styrene-butadiene rubber, nitrile-butadiene rubber, polystyrene, and polycarbonate. In particular, polyacrylonitrile, polyvinylidene fluoride, polyhexafluoropropylene, or polyethylene oxide is preferred from the viewpoint of electrochemical stability.

[1.2 Deep Drawing Machine]

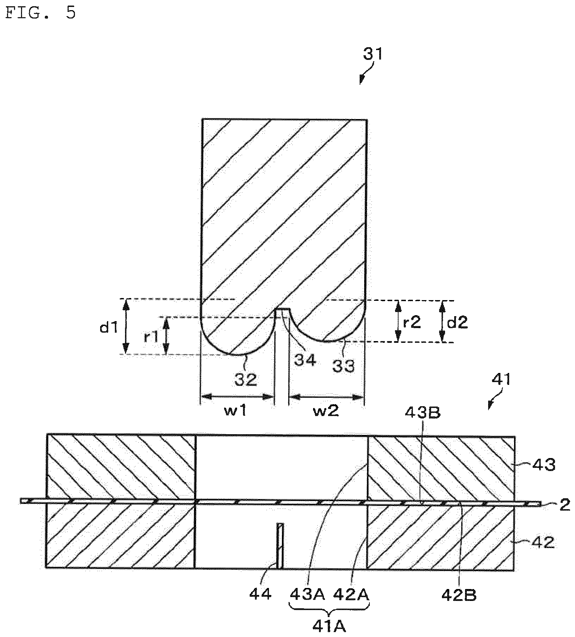

Hereinafter, an example of the configuration of a deep drawing machine to be used for manufacturing the battery according to the first embodiment of the present technology will be described with reference to FIG. 5.

The deep drawing machine includes a punch 31 and a die 41 having a hole portion 41A into which the punch 31 is pushed. The punch 31 is held by a driving unit (not illustrated) so as to be pushed into the hole portion 41A and pulled out from the hole portion 41A. The punch 31 includes two substantially partial cylindrical embossed molded portions (hereinafter simply referred to as "molded portions") 32 and 33 having different heights extending in the same direction and arranged in a direction perpendicular to the extending direction.

The molded portions 32 and 33 of the punch 31 are configured to satisfy the following formulas (1a) to (3a).

$$d1 > d2 \ldots (1a)$$

(In the formula (1a), d1 and d2 are the heights of the molded portions 32 and 33.)

$$r1 = r2 \ldots (2a)$$

(In the formula (2a), r1 and r2 are the radii of the molded portions 32 and 33.)

$$w1 = w2 \ldots (3a)$$

(In the formula (3a), w1 and w2 are the widths of the molded portions 32 and 33.)

The molded portions 32 and 33 of the punch 31 may be configured to satisfy the relationships of the following formulas (1b) to (3b).

$$d1 > d2 \ldots (1b)$$

$$r1 > r2 \ldots (2b)$$

$$w1 > w2 \ldots (3b)$$

The die 41 includes a lower die (lower type) 42 having a placement surface 42B on which the outer package member 2 is placed, and an upper die (upper type) 43 having a holding surface 43B for holding the wrinkles of the outer package member 2 placed on the lower die 42, and has the configuration in which the outer package member 2 can be sandwiched between the lower die 42 and the upper die 43. The lower die 42 and the upper die 43 have hole portions 42A and 43A that are through holes, respectively, and the hole portion 41A is formed by overlapping the hole portions 42A and 43A.

The lower die 42 preferably has a plate-like support member 44 that supports the outer package member 2 deformed by the punch 31 at the boundary portion 34 between the molded portions 32 and 33. The support member 44 is provided at the center of the hole portion 42A such that the top portion of the support member 44 faces the boundary portion 34. Since the distance between the housing portions 2X and 2Y can be reduced by adopting the support member 44 having the above configuration, the electrode body 1 can be sealed with the outer package member 2 in a state in which the folded portion 2D of the outer package member 2 does not protrude from the peripheral surface of the housing portion 2W. Therefore, the housing portion 2W can be formed into a shape much closer to the cylindrical shape.

Preferably, the top portion (tip portion) of the support member 44 that faces the boundary portion 34, is located at a position displaced in the pressing direction (pushing direction) of the punch 31 with reference to the placement surface 42B of the lower die 42, more specifically, a position lower (inner side) than the placement surface 42B of the lower die 42. Preferably, the difference in position between the top portion of the support member 44 and the placement surface 42B of the lower die 42 in the pushing direction of the punch 31 is equal to or more than half of the thickness of the support member 44, and is equal to or less than 10 times the thickness of the outer package member 2. This is because the housing portion 2W can be formed into a shape much closer to the cylindrical shape.

[1.3 Method of Manufacturing Battery]

Hereinafter, an example of the method of manufacturing a battery according to the first embodiment of the present technology will be described with reference to FIGS. 5, 6A to 6D, and 7A to 7C.

(Step of Forming Outer Package Member)

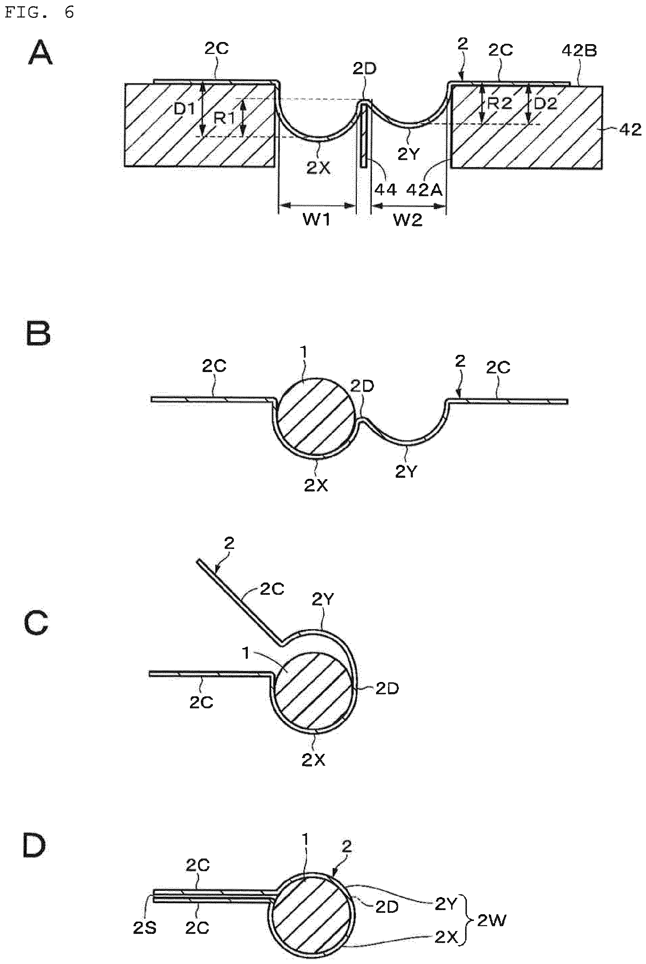

As described below, embossing is performed using the deep drawing machine illustrated in FIG. 5 to form the outer package member 2. First, the outer package member 2 is sandwiched between the placement surface 42B of the lower die 42 and the holding surface 43B of the upper die 43. Next, the punch 31 is lowered and pushed into the hole portion 41A, the inner surface (first surface) of the outer package member 2 is pressed by the molded portions 32 and 33, and the outer surface (second surface) of the outer package member 2 is supported by the support member 44 at the position of the boundary portion 34, thereby deforming the outer package member 2. When the molded portions 32 and 33 are pushed into a predetermined depth, the punch 31 is raised and pulled out from the hole portion 41A. Consequently, as illustrated in FIG. 6A, the housing portions 2X and 2Y are formed in the outer package member 2.

In the "step of molding the outer package member", the housing portions 2X and 2Y are formed using the punch 31 that satisfies the relationships of the above formulas (1b) to (3b), so as to satisfy the following formulas (1A) to (3A) .

$$D1 > D2 \ldots (1A)$$

(In the formula (1A), D1 and D2 are the depths of the housing portions 2X and 2Y with reference to the inner surfaces of the peripheral portions 2A, 2B and 2C.)

$$R1 = R2 \ldots (2A)$$

(In the formula (2A), R1 and R2 are the radii of the housing portions 2X and 2Y.)

$$W1 = W2 \ \ldots (3A)$$

(In the formula (3A), W1 and W2 are the widths of the housing portions 2X and 2Y.)

In the "step of molding the outer package member", the housing portions 2X and 2Y are formed using the punch 31 that satisfies the relationships of the above formulas (1b) to (3b), so as to satisfy the following formulas (1B) to (3B) .

$$D1 > D2 \ \ldots (1B)$$

$$R1 > R2 \ \ldots (2B)$$

$$W1 > W2 \ \ldots (3B)$$

Preferably, the width of the boundary portion 34 of the punch 31 and the width of the top portion of the support member 44 are narrow in the above-mentioned "step of molding the outer package member". Thus, the distance between the housing portions 2X and 2Y can be reduced, whereby the electrode body 1 can be sealed with the outer package member 2 in a state in which the folded portion 2D of the outer package member 2 does not protrude from the peripheral surface of the housing portion 2W. Therefore, the housing portion 2W can be formed into a shape much closer to the cylindrical shape.

(Step of Sealing Electrode Body)

Three sides excluding the folded portion 2D on the peripheral surface side of the periphery of the housing portion 2W are sealed, and the electrode body 1 is sealed with the outer package member 2 as follows. Firstly, as illustrated in FIG. 6B, the electrode body 1 with the positive electrode lead 3 and the negative electrode lead 4 attached thereto is housed in the housing portion 2X having a deeper depth than that of the housing portion 2Y. Next, the outer package member 2 is folded back at the folded portion 2D between the housing portions 2X and 2Y as illustrated in FIG. 6C, the peripheral portions 2A, 2B, and 2C surrounding the three sides of both the end surface sides and the peripheral surface side (side surface side) of the periphery of the housing portions 2X and 2Y are overlapped with each other, and the housing portions 2X and 2Y are combined as illustrated in FIG. 6D, thereby forming the housing portion 2W. At this time, preferably, the sealant material 5A is disposed between the positive electrode lead 3 and the outer package member 2, and the sealant material 5B is provided between the negative electrode lead 4 and the outer package member 2.

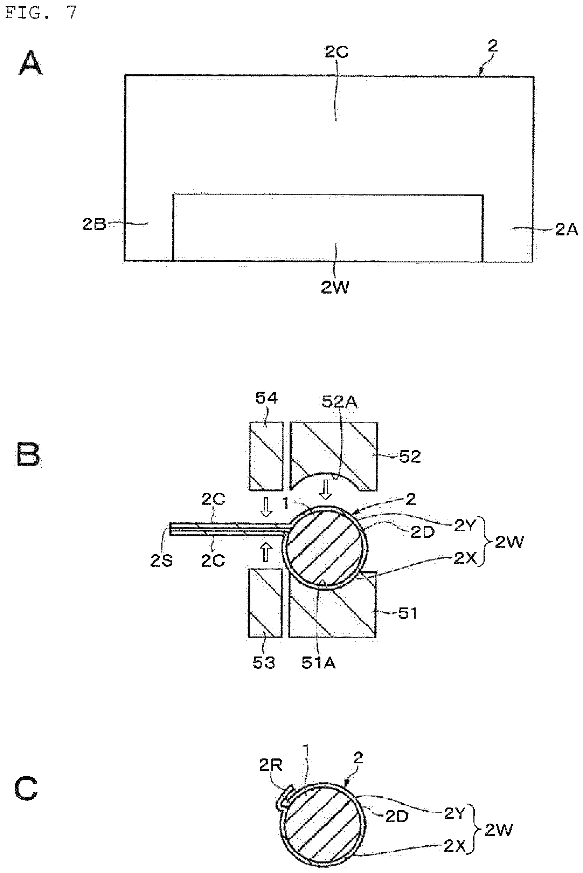

Subsequently, as illustrated in FIG. 7A, the peripheral portions 2A and 2B overlapped on both end surface sides of the housing portion 2W are sealed by thermal fusion or the like, thereby forming the seal portions 2P and 2Q on both end surface sides of the housing portion 2W, and forming a cavity 2S on the peripheral surface side of the housing portion 2W (see FIG. 6D). Hereinafter, the electrode body 1 housed in the outer package member 2 in such a state is referred to as "battery precursor".

Subsequently, as illustrated in FIG. 7B, the battery precursor is held by recesses 51A and 52A of molds 51 and 52. The recesses 51A and 52A have a substantially partial cylindrical shape with substantially the same radius as that of the housing portion 2X or the housing portion 2Y. Subsequently, the battery precursor held by the molds 51 and 52 is transported into a vacuum chamber (not illustrated), and is fixed at a predetermined position.

Subsequently, the cavity 2S (i.e., the peripheral portions 2C and 2C) is sandwiched from both sides of heat blocks 53 and 54 as heating units provided in the vacuum chamber while deaerating the inside of the vacuum chamber, and the cavity 2S is sealed by thermal fusion or the like, thereby forming the seal portion 2R. As a result, the seal portion 2R can be formed while deaerating the inside of the outer package member 2. At the time of forming the seal portion 2R, preferably, a tensile force is applied to the outer package member 2 by sandwiching the cavity 2S from both sides of the heat blocks 53 and 54 so that the outer package member 2 is brought into close contact with the electrode body 1, and thus the folded portion 2D does not protrude from the peripheral surface of the housing portion 2W. This is because the adhesiveness of the outer package member 2 to the electrode body 1 can be increased and the housing portion 2W can be formed into a shape much closer to the cylindrical shape.

Subsequently, the seal portion 2R is cut, if necessary, to leave a predetermined width, and then as illustrated in FIG. 7C, the seal portion 2R may be fixed by adhering the seal portion 2R to the peripheral surface of the housing portion 2W by thermal fusion or the like so that the seal portion 2R follows the peripheral surface of the housing portion 2W. The seal portion 2R is fixed in this manner, whereby the peripheral surface of the battery can be formed into a shape much closer to the cylindrical shape, and the entire battery can be made more compact.

[1.4 Effect]

In the battery according to the first embodiment, the seal portions 2P and 2Q standing substantially perpendicularly to the end surface of the housing portion 2W are provided so as to be displaced from the center of the end surface of the housing portion 2W, whereby it is possible to widen the housing space in the end surface of the housing portion 2W. Therefore, when considering the configuration including the circuit member, the volumetric efficiency as the entire battery can be improved. Therefore, it is possible to provide a battery suitable for application to portable devices, wearable devices, and the like. Here, the housing space in the end surface of the housing portion 2W is a substantially partial cylindrical space formed by virtually extending one end surface of the housing portion 2X from the position thereof to the tip position of the seal portion 2P.

The outer package member 2 is folded back at the folded portion 2D and the electrode body 1 is sealed by the folded outer package member 2, whereby the seal portion 2R can be provided on one place of the peripheral surface side of the electrode body 1. Therefore, the volumetric efficiency of the battery can be improved.

When the seal portion 2R is provided so as to follow the substantially cylindrical peripheral surface of the housing portion 2W, and the folded portion 2D is provided without protruding from the peripheral surface of the housing portion 2W, the shape of the peripheral surface of the battery can be made closer to the cylindrical surface. Therefore, the volumetric efficiency of the battery can be further improved.

[1.5 Modified Example]

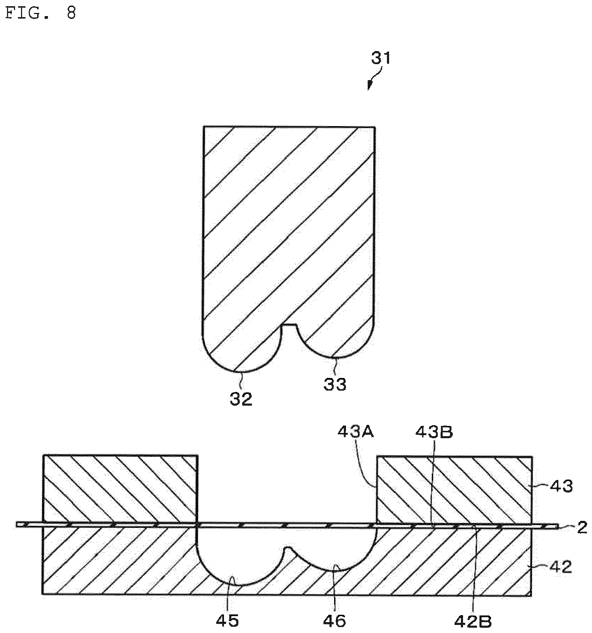

Instead of the hole portion 42A and the support member 44 illustrated in FIG. 5, the lower die 42 may have two substantially partial cylindrical recesses 45 and 46 having different depths extending in the same direction and arranged in a direction perpendicular to the extending direction as illustrated in FIG. 8. The substantially partial cylindrical shapes of the recesses 45 and 46 are substantially the same as the substantially partial cylindrical shapes of the molded portions 32 and 33. The outer package member 2 is deformed by pushing the inner surface of the outer package member 2 with the molded portions 32 and 33, and the outer package member 2 is sandwiched by the molded portions 32 and 33 and the recesses 45 and 46, whereby the housing portions 2X and 2Y are formed in the outer package member 2. In this case, it is possible to suppress variations in shape of the housing portions 2X and 2Y.

In the method of manufacturing a battery according to the first embodiment, the case where the battery precursor held by the molds 51 and 52 is transported into the vacuum chamber has been described as an example, but the battery precursor may be transported to the molds 51 and 52 that have been previously included in the vacuum chamber.

<2 Second Embodiment>

[2.1 Battery]

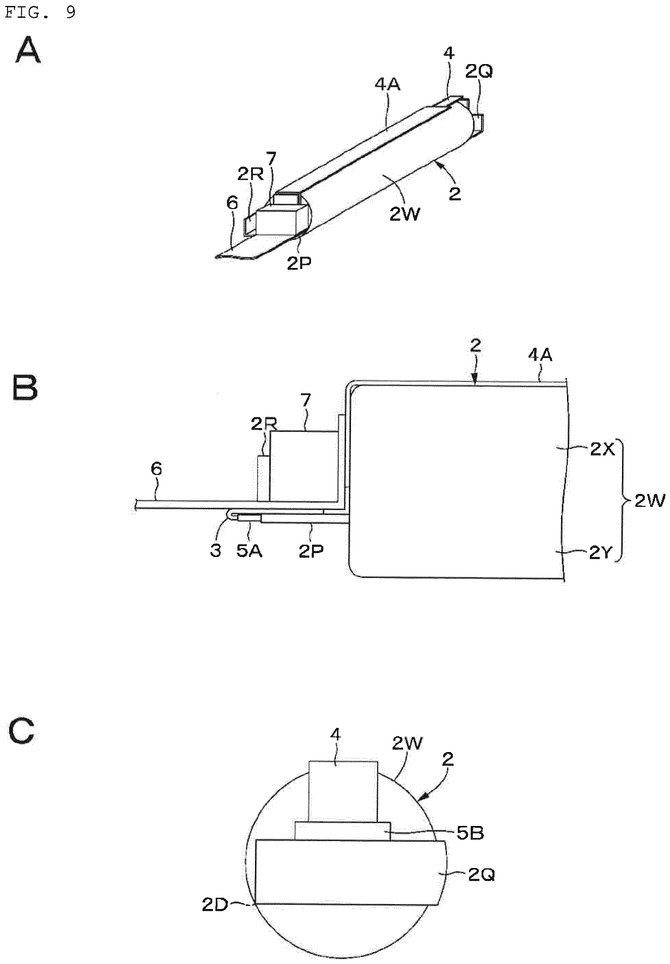

As illustrated in FIGS. 9A and 9B, the battery according to the second embodiment of the present technology includes a printed circuit board 6 and a circuit element 7 that are disposed on the seal portion 2P on one end surface of the housing portion 2W. The printed circuit board 6 and the circuit element 7 are an example of a circuit member, and are disposed in the housing space on the end surface side of the housing portion 2X having a larger area than that of the housing portion 2Y. As illustrated in FIG. 9C, the seal portion 2Q provided on the other end surface side of the housing portion 2W is bent toward the center side of the end surface, and is substantially parallel to the end surface.

Preferably, one or both of the printed circuit board 6 and the circuit element 7 is located inside the outer periphery of the end surface when viewed from the direction perpendicular to the one end surface of the housing portion 2W. This is because the volumetric efficiency of the entire battery including the circuit member can be further improved. Preferably, one or both of the printed circuit board 6 and the circuit element 7 is provided substantially parallel or substantially perpendicular to one end surface of the housing portion 2W. This is because one or both of the printed circuit board 6 and the circuit element 7 are likely to be located inside the outer periphery of the end surface as described above.

The positive electrode lead 3 led out from one end surface side of the housing portion 2W is folded back toward one end surface of the housing portion 2W, and the folded-back portion is electrically connected to the printed circuit board 6. The negative electrode lead 4 led out from the other end surface side of the housing portion 2W is electrically connected to the printed circuit board 6 with a plate-like or linear connecting member 4A interposed therebetween.

(Printed Circuit Board)

The printed circuit board 6 is bent in an L-shape and is disposed on the seal portion 2P along the end surface of the housing portion 2X and the seal portion 2P. The printed circuit board has a positive electrode terminal and a negative electrode terminal (not illustrated) to be connected to an external device. The type of the printed circuit board is not particularly limited, and it may be any of a rigid board, a flexible board, and a rigid-flexible board.

(Circuit Element)

The circuit element 7 is mounted on the printed circuit board 6 disposed on the seal portion 2P. The circuit element 7 has a protective circuit, a voltage detection circuit, and the like, and is electrically connected to the positive electrode lead 3 and the negative electrode lead 4 with the printed circuit board 6 interposed therebetween.

[2.2 Effect]

In the battery according to the second embodiment, since the seal portion 2P standing substantially perpendicularly to the end surface of the housing portion 2W is provided so as to be displaced from the center of the end surface of the housing portion 2W, whereby it is possible to widen the housing space for disposing the circuit element 7 and the printed circuit board 6 in the end surface of the housing portion 2W. Therefore, the degree of freedom of the configurations of the printed circuit board 6 and the circuit element 7 is improved, and the volumetric efficiency of the entire battery including the circuit member can be improved.

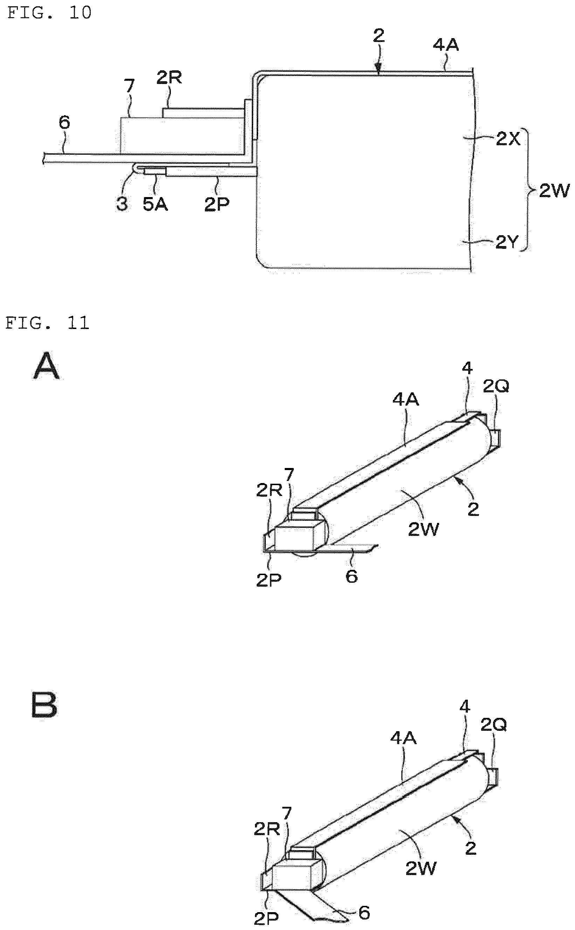

In the battery according to the second embodiment, as illustrated in FIG. 9B, the seal portion 2P is displaced from the center of the substantially circular end surface of the housing portion 2W, whereby it is possible to widen the housing space for disposing the circuit element 7. Therefore, the length of the battery including the circuit element 7 can be shortened, and the volumetric efficiency of the entire battery including the circuit member is improved. On the other hand, as illustrated in FIG. 10, in the battery in which the seal portion 2P is provided at the center of the substantially circular end surface of the housing portion 2W, the housing space for disposing the circuit element 7 is narrowed. Therefore, the length of the battery including the circuit element 7 is lengthened, and the volumetric efficiency of the entire battery including the circuit member is decreased.

[2.3 Modified Example]

In the above-described second embodiment, the configuration of disposing the printed circuit board 6 and the circuit element 7 on the seal portion 2P from which the positive electrode lead 3 is led out has been described as an example, but the present technology is not limited thereto. The printed circuit board 6 and the circuit element 7 may be disposed on the seal portion 2Q from which the negative electrode lead 4 is led out, or the printed circuit board 6 and the circuit element 7 may be disposed on both of the seal portions 2P and 2Q.

In the above-described second embodiment, the configuration of connecting both the positive electrode lead 3 and the negative electrode lead 4 to the printed circuit board 6 has been described as an example, but the present technology is not limited thereto. It is also possible to adopt the configuration of connecting at least one of the positive electrode lead 3 and the negative electrode lead 4 to the printed circuit board 6.

In the above-described second embodiment, the case where the printed circuit board 6 is bent in an L-shape has been described as an example, but the form of the printed circuit board is not limited thereto. When exemplified, a printed circuit board bent into a shape other than the L-shape may be used, a flat plate-like printed circuit board may be used, and a printed circuit board having a multilayer structure or a folded structure may be used. The number of the printed circuit board 6 is not particularly limited, and a plurality of printed circuit boards 6 may be disposed on the seal portion 2P. Since the seal portion 2P is displaced from the center of the substantially circular end surface of the housing portion 2W, it is easy to dispose the printed circuit board having a multilayer structure or a folded structure, or the plurality of printed circuit boards 6 on the seal portion 2P.

In the second embodiment described above, the example in which the negative electrode lead 4 and the printed circuit board 6 are connected by the connecting member 4A has been described; however, the length of the negative electrode lead 4 may be increased so that the negative electrode lead 4 and the printed circuit board 6 are directly connected.

In the above-mentioned second embodiment, the case where the printed circuit board 6 is extended in a direction perpendicular to the other end surface of the housing portion 2W has been described as an example; however, the printed circuit board 6 may be extended in an oblique direction to one end surface of the housing portion 2W as illustrated in FIG. 11A, and the printed circuit board 6 may be extended in a horizontal direction to one end surface of the housing portion 2W as illustrated in FIG. 11B.

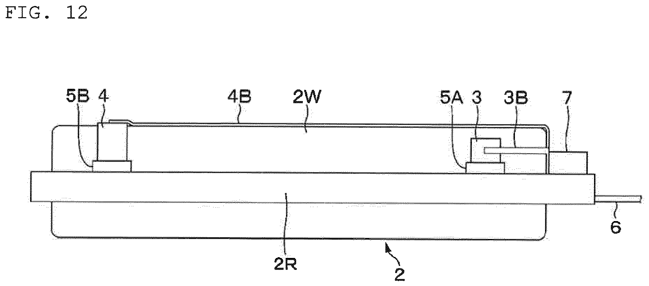

As illustrated in FIG. 12, the positive electrode lead 3 and the negative electrode lead 4 may be led out from the seal portion 2R provided on the peripheral surface side of the housing portion 2W. In this case, the positive and negative electrode leads 3 and 4 that are led out are respectively connected to the printed circuit board 6 with the plate-like or linear connecting members 3B and 4B interposed therebetween.

<3. Third Embodiment>

[3.1 Configuration of Assembled Battery]

The assembled battery according to the third embodiment is one in which the batteries according to the first embodiment are connected in series or in parallel.

(First Assembled Battery)

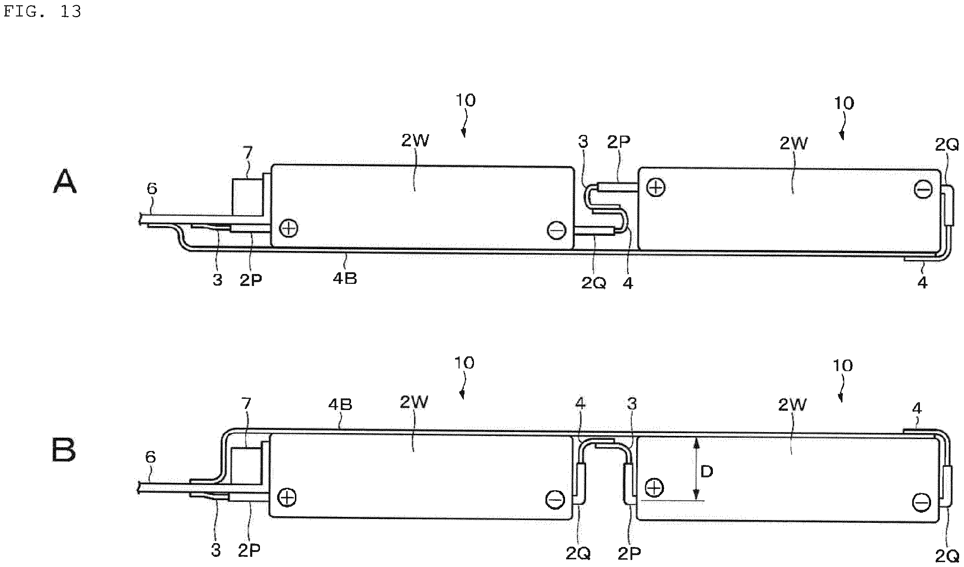

FIG. 13A illustrates the configuration of the first assembled battery. The first assembled battery has the configuration in which a plurality of batteries 10 is connected in series. It is to be noted that in FIG. 13A, the illustration of the seal portion 2R is omitted. In FIG. 13A, the symbols "+" and "-" represent polarities of the positive and negative electrode leads 3 and 4 drawn out from the end surface of the housing portion 2W.

The plurality of batteries 10 is arranged in the axial direction of the substantially cylindrical housing portion 2W so that the end surface of the housing portion 2W from which the positive electrode lead 3 of one adjacent battery 10 is led out faces the end surface of the housing portion 2W from which the negative electrode lead 4 of the other adjacent battery 10 is led out. The positive electrode lead 3 and the negative electrode lead 4 are connected to each other at the facing end surfaces.

The seal portions 2P and 2Q between the two adjacent batteries 10 stand substantially perpendicularly to the end surface of the housing portion 2W. In order to prevent the seal portions 2Q and 2P from interfering between the two adjacent batteries 10, one adjacent battery 10 is rotated about the center axis of the substantially cylindrical housing portion 2W as the rotational center axis with respect to the other battery 10. The angle of rotation is preferably about 180 degrees.

The seal portion 2P of the battery 10 located at one end of the assembled battery stands substantially perpendicularly to the end surface of the housing portion 2W. The printed circuit board 6 and the circuit element 7 are disposed on the seal portion 2P standing substantially perpendicularly. The positive electrode lead 3 of the battery 10 located at one end of the assembled battery is connected to the printed circuit board 6.

The seal portion 2Q of the battery 10 located at the other end of the assembled battery is bent toward the center side of the end surface of the housing portion 2W, thereby being substantially parallel to the end surface. The negative electrode lead 4 led out from the seal portion 2Q is connected to the printed circuit board 6 with a plate-like or linear connecting member 4B interposed therebetween.

(Second Assembled Battery)

FIG. 13B illustrates the configuration of the second assembled battery. The seal portions 2P and 2Q between the two adjacent batteries 10 are provided so as to face each other, and are bent toward the center side of the end surface of the housing portion 2W, thereby being substantially parallel to the end surface. The configurations other than the above are similar to those of the assembled battery in the first example.

(Third Assembled Battery)

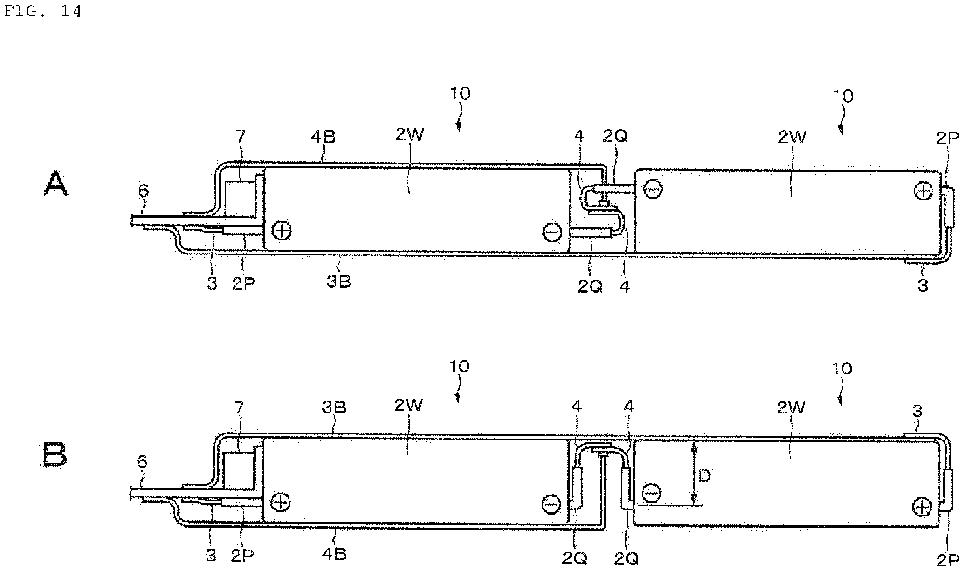

FIG. 14A illustrates the configuration of the third assembled battery. The third assembled battery has the configuration in which a plurality of batteries 10 is connected in parallel. It is to be noted that in FIG. 14A, the illustration of the seal portion 2R is omitted. The plurality of batteries 10 are arranged in the axial direction of the substantially cylindrical housing portion 2W such that the end surfaces of the housing portions 2W from which the negative electrode leads 4 are led out face each other. The negative electrode leads 4 are connected to each other on the facing end surfaces.

The seal portions 2Q and 2Q between the two adjacent batteries 10 stand substantially perpendicularly to the end surface of the housing portion 2W. In order to prevent the seal portions 2Q and 2Q from interfering between the two adjacent batteries 10, one adjacent battery 10 is rotated about the center axis of the substantially cylindrical housing portion 2W as the rotational center axis with respect to the other battery 10. The angle of rotation is preferably about 180 degrees.

The seal portion 2P of the battery 10 located at one end of the assembled battery stands substantially perpendicularly to the end surface of the housing portion 2W. The printed circuit board 6 and the circuit element 7 are disposed on the seal portion 2P standing substantially perpendicularly.

The positive electrode lead 3 of the battery 10 located at one end of the assembled battery is connected to the printed circuit board 6. The seal portion 2P of the battery 10 located at the other end of the assembled battery is bent toward the center side of the end surface of the housing portion 2W, thereby being substantially parallel to the end surface. The positive electrode lead 3 led out from the seal portion 2P is connected to the printed circuit board 6 with a plate-like or linear connecting member 3B interposed therebetween. The negative electrode lead 4 connected at the facing end surface is connected to the printed circuit board 6 with the plate-like or linear connecting member 4B interposed therebetween.

(Fourth Assembled Battery)

FIG. 14B illustrates the configuration of the fourth assembled battery. The seal portions 2Q and 2Q between the two adjacent batteries 10 are provided so as to face each other and are bent toward the center side of the end surface of the housing portion 2W, thereby being substantially parallel to the end surface.

(Assembled Batteries of Reference Examples 1 to 4)

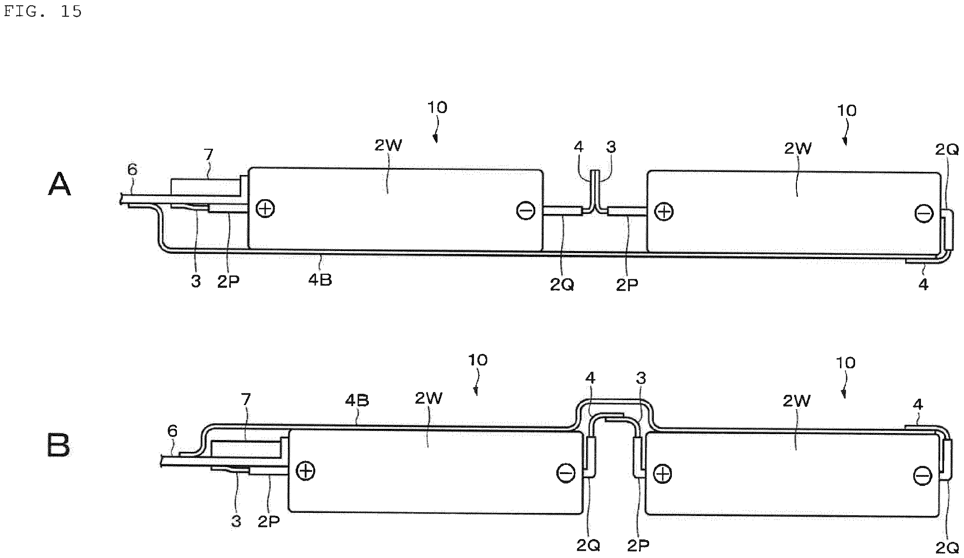

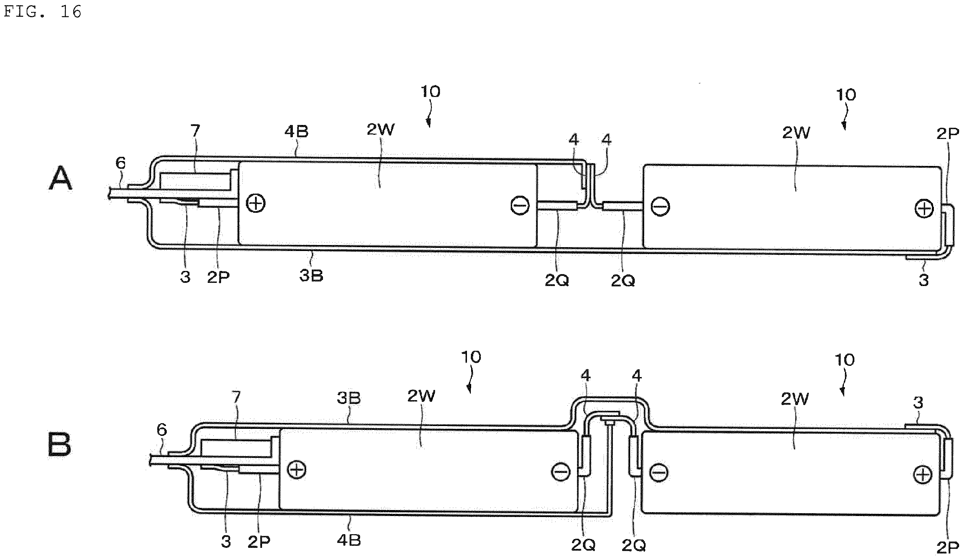

As illustrated in FIGS. 15A, 15B, 16A, and 16B, the assembled batteries of Reference Examples 1 to 4 have the same configuration as those of the first to fourth assembled batteries, except that a battery having the seal portions 2P and 2Q provided at the center of the substantially circular end surface of the housing portion 2W is used.

[3.2 Effect]

In the first and third assembled batteries, the plurality of batteries 10 is used in which the seal portion 2P standing substantially perpendicular to the end surface of the housing portion 2W is provided so as to be displaced from the center of the end surface of the housing portion 2W. Therefore, one adjacent battery 10 is rotated about the center axis of the housing portion 2W as the rotational center axis with respect to the other battery 10, whereby it is possible to prevent the seal portions 2Q, 2P or the seal portions 2Q, 2Q from interfering between the two adjacent batteries 10. In contrast, in the assembled batteries of Reference Examples 1 and 3, it is inevitable that the seal portions 2Q, 2P or the seal portions 2Q, 2Q interfere between the two adjacent batteries 10. Therefore, the space between the batteries in the first and third assembled batteries is about a half of the space between the batteries in the assembled batteries of Reference Examples 1 and 3. Therefore, the space between the batteries in the first and third assembled batteries can be reduced, as compared with that in the assembled batteries of Reference Examples 1 and 3.

In the second and fourth assembled batteries, the used battery 10 is in that the seal portions 2Q, 2P or the seal portions 2Q, 2Q are bent toward the center side of the end surface of the housing portion 2W between the two adjacent batteries 10, thereby being substantially parallel to the end surface. Therefore, the space width between the adjacent batteries 10 can be reduced. In addition, the seal portions 2Q, 2P or the seal portions 2Q, 2Q between the two adjacent batteries 10 are provided so as to be displaced from and face the center of the end surface of the housing portion 2W. Therefore, a height D of the space capable of housing the bent seal portion 2Q can be increased. It is to be noted that the height D is equal to the sum of the "radius of the housing portion 2W" and "the amount displaced from the center of the seal portions 2P and 2Q". On the other hand, in the assembled batteries of Reference Examples 2 and 4, although the space width between the adjacent batteries 10 can be reduced, the height D of the space capable of housing the bent seal portion 2Q cannot be increased.

[3.3 Modified Example]

The batteries according to the first embodiment may be connected in series and in parallel to form an assembled battery. For example, the first and/or second assembled batteries and the third and/or fourth assembled batteries may be connected to form a series-parallel assembled battery.

It is also possible to form an assembled battery having a curved shape, a circular shape, an elliptical shape, or the like as a whole by arranging a plurality of batteries so that the end surfaces of the housing portions 2W face each other. In this case as well, it is possible to secure a wide arrangement space for the circuit members such as the printed circuit board 6 and the circuit element 7, and to increase the degree of freedom of the shape of the assembled battery.

<4. Fourth Embodiment>

In the fourth embodiment, an electronic device including the battery according to the first embodiment or a modified example thereof will be described.

[4.1 Configuration of Electronic Device]

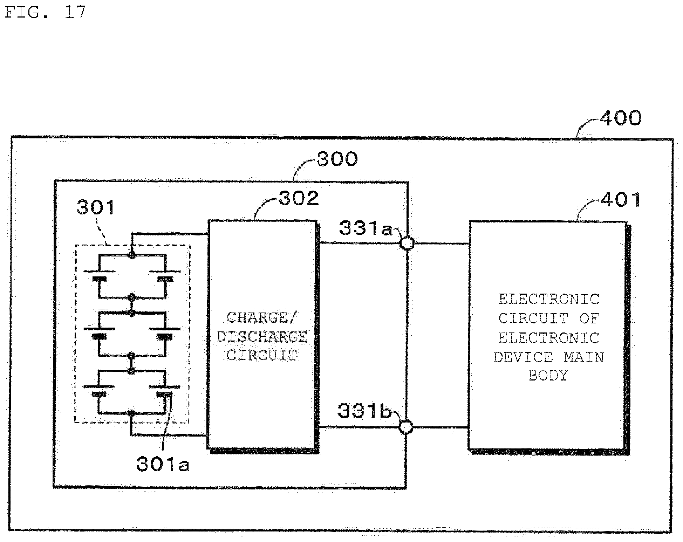

Hereinafter, a configuration example of a battery pack 300 and an electronic device 400 according to the fourth embodiment of the present technology will be described with reference to FIG. 17. The electronic device 400 includes an electronic circuit 401 of an electronic device main body and the battery pack 300. The battery pack 300 is electrically connected to the electronic circuit 401 with a positive electrode terminal 331a and a negative electrode terminal 331b interposed therebetween. For example, the electronic device 400 has a configuration that allows a user to detachably attach the battery pack 300. It is to be noted that the configuration of the electronic device 400 is not limited thereto, and the electronic device 400 may have a configuration in which the battery pack 300 is built in the electronic device 400 so that the user cannot remove the battery pack 300 from the electronic device 400.

When charging the battery pack 300, the positive electrode terminal 331a and the negative electrode terminal 331b of the battery pack 300 are respectively connected to a positive electrode terminal and a negative electrode terminal of a charger (not illustrated). On the other hand, when discharging the battery pack 300 (when using the electronic device 400), the positive electrode terminal 331a and the negative electrode terminal 331b of the battery pack 300 are respectively connected to the positive electrode terminal and the negative electrode terminal of the electronic circuit 401.

Examples of the electronic device 400 include portable devices such as wearable devices, notebook-type personal computers, tablet computers, mobile phones (e.g., smartphones) or personal digital assistants (PDAs); display devices (e.g., LCDs, EL displays, electronic paper); imaging devices (e.g., digital still cameras, digital video cameras); audio devices (e.g., portable audio players); game devices, cordless phone handsets, e-books, electronic dictionaries, radios, headphones, navigation systems, memory cards, pacemakers, hearing aids, electric tools, electric shavers, refrigerators, air conditioners, televisions, stereos, water heaters, microwave ovens, dishwashers, washing machines, driers, lighting devices, toys, medical devices, robots, road conditioners, and traffic lights, but it is not limited thereto.

(Electronic Circuit)

The electronic circuit 401 includes, for example, a CPU, a peripheral logic unit, an interface unit, a memory unit, and the like, and controls the entire of the electronic device 400.

(Battery Pack)

The battery pack 300 includes an assembled battery 301 and a charge/discharge circuit 302. The assembled battery 301 is configured by connecting a plurality of secondary batteries 301a in series and/or in parallel. The plurality of secondary batteries 301a is connected, for example, in the form of n in parallel and m in series (n and m are positive integers). It is to be noted that, in FIG. 17, an example is illustrated in which six of the secondary batteries 301a are connected in the form of two in parallel and three in series (2P3S). As the secondary battery 301a, the battery according to the first embodiment or a modified example thereof is used.

The charge/discharge circuit 302 is a control unit that controls charging/discharging of the assembled battery 301. Specifically, the charge/discharge circuit 302 controls charging of the assembled battery 301 during charging. On the other hand, the charge/discharge circuit 302 controls discharging to the electronic device 400 during discharging (i.e., when using the electronic device 400).

[4.2 Modified Example]

In the fourth embodiment described above, the case where the battery pack 300 includes the assembled battery 301 formed of the plurality of secondary batteries 301a has been described as an example, but the configuration in which the battery pack 300 includes one secondary battery 301a instead of the assembled battery 301 may be adopted.

Although the embodiments of the present technology have been specifically described above, the present technology is not limited to the above-described embodiments, and various modifications based on the technical idea of the present technology can be made.

For example, the configurations, methods, processes, shapes, materials, numerical values, and the like mentioned in the above embodiments are merely examples, and if necessary, different configurations, methods, processes, shapes, materials, numerical values, and the like may be used.

Further, the configurations, methods, processes, shapes, materials, numerical values, and the like of the above-described embodiments can be combined with each other without departing from the gist of the present technology.

Further, the present technology can take the following configurations:

(1) A battery including: an electrode body having a substantially cylindrical shape; and an outer package member having a film shape and including: a housing portion that has a substantially cylindrical shape and houses the electrode body; and seal portions that are provided on three sides of a periphery of the housing portion excluding a folded portion provided on a peripheral surface side, where one of the seal portions provided on an end surface side of the housing portion is displaced from a center position of an end surface.

(2) The battery according to (1), where the housing portion includes a first housing portion having a substantially partial cylindrical shape, and a second housing portion having a substantially partial cylindrical shape, each of which have different depths.

(3) The battery according to (1) or (2), where the folded portion does not protrude from a peripheral surface of the housing portion.

(4) The battery according to any one of (1) to (3), where the seal portions are provided on both end surface sides and the peripheral surface side of the housing portion.

(5) The battery according to any one of (1) to (4), further including a circuit member provided on an end surface portion of the housing portion, where the circuit member is located inside an outer periphery of the end surface when viewed from a direction perpendicular to the end surface.

(6) The battery according to (5), where the circuit member is provided on one of the seal portions provided on the end surface.

(7) The battery according to (5) or (6), where the circuit member is provided substantially parallel or substantially perpendicular to the end surface.

(8) The battery according to any one of (5) to (7), where the circuit member is a printed circuit board.

(9) The battery according to any one of (1) to (8), further including positive and negative electrode leads provided on the electrode body, where the positive and negative electrode leads are bent so as to be along the end surface of the electrode body.

(10) The battery according to any one of (1) to (9), where one of the seal portions provided on the peripheral surface side of the housing portion is bent so as to follow the peripheral surface of the housing portion.

(11) The battery according to any one of (1) to (10), further including: a first lead led out from one end surface side of the housing portion to an outside of the outer package member; and a second lead led out from another end surface side of the housing portion to the outside of the outer package member.

(12) The battery according to (11), further including a circuit member provided on one end surface portion of the housing portion and connected to the first lead and the second lead.

(13) An assembled battery including a plurality of the batteries according to any one of (1) to (12) that are connected to each other.

(14) An electronic device including the battery according to any one of (1) to (12).

(15) A method of manufacturing a battery including: forming first and second housing portions having a substantially partial cylindrical shape and different depths extending in a same direction and arranged in a direction perpendicular to an extending direction on an outer package member having a film shape; folding back the outer package member between the first and second housing portions and housing an electrode body having a substantially cylindrical shape in the first and second housing portions; and sealing three sides of a periphery of a housing portion including the first and second housing portions excluding a folded portion provided on a peripheral surface side.

(16)The method of manufacturing a battery according to (15), where both end sides of the housing portion are sealed, and then the peripheral surface side of the housing portion is sealed while deaerating an inside of the outer package member.

(17)The method of manufacturing a battery according to (16), where a tensile force is applied to the outer package member so as to bring the electrode body into close contact with the outer package member when the peripheral surface side is sealed.

(18) The method of manufacturing a battery according to any one of (15) to (17), where a first surface of the outer package member is pressed by first and second molded portions having a substantially partial cylindrical shape and different depths extending in a same direction and arranged in a direction perpendicular to an extending direction, and a second surface of the outer package member is supported by a support member between the first and second molded portions, thereby deforming the outer package member.

(19)The method of manufacturing a battery according to (18), where a height of the first molded portion is higher than a height of the second molded portion, and a width of the first molded portion is wider than a width of the second molded portion.

(20) The method of manufacturing a battery according to (18) or (19), where a tip of the support member is located at a position displaced in a pressing direction with reference to a placement surface on which the outer package member is placed.

(21) The method of manufacturing a battery according to any one of (15) to (20), where a thickness of the support member is equal to or less than 10 times a thickness of the outer package member.

DESCRIPTION OF REFERENCE SYMBOLS

1: Electrode body
2: Outer package member
2W, 2X, 2Y: Housing portion
2A, 2B, 2C: Peripheral portion
2D: Folded portion
2P, 2Q, 2R: Seal portion
3: Positive electrode lead
4: Negative electrode lead
6: Printed circuit board
7: Circuit element
10: Battery
31: Punch

32, 32: Molded portion
41: Die
41A, 42A, 43A: Hole portion
42: Lower die
43: Upper die
44: Support member

**Claims**

1. A battery comprising:

   an electrode body having a substantially cylindrical shape; and
   an outer package member having a film shape and including:

      a housing portion that has a substantially cylindrical shape and houses the electrode body; and
      seal portions that are provided on three sides of a periphery of the housing portion excluding a folded portion provided on a peripheral surface side,

   wherein one of the seal portions provided on an end surface side of the housing portion is displaced from a center position of an end surface.

2. The battery according to claim 1, wherein the housing portion includes a first housing portion having a substantially partial cylindrical shape, and a second housing portion having a substantially partial cylindrical shape , each of which have different depths.

3. The battery according to claim 1, wherein the folded portion does not protrude from a peripheral surface of the housing portion.

4. The battery according to claim 1, wherein the seal portions are provided on both end surface sides and the peripheral surface side of the housing portion.

5. The battery according to claim 1, further comprising a circuit member provided on an end surface portion of the housing portion,
   wherein the circuit member is located inside an outer periphery of the end surface when viewed from a direction perpendicular to the end surface.

6. The battery according to claim 5, wherein the circuit member is provided on one of the seal portions provided on the end surface.

7. The battery according to claim 5, wherein the circuit member is provided substantially parallel or perpendicular to the end surface.

8. The battery according to claim 5, wherein the circuit member is a printed circuit board.

9. The battery according to claim 1, further comprising positive and negative electrode leads provided on the electrode body,
wherein the positive and negative electrode leads are bent so as to be along the end surface of the electrode body.

10. The battery according to claim 1, wherein one of the seal portions provided on the peripheral surface side of the housing portion is bent so as to follow the peripheral surface of the housing portion.

11. The battery according to claim 1, further comprising:

a first lead led out from one end surface side of the housing portion to an outside of the outer package member; and
a second lead led out from another end surface side of the housing portion to the outside of the outer package member.

12. The battery according to claim 11, further comprising a circuit member provided on one end surface portion of the housing portion and connected to the first lead and the second lead.

13. An assembled battery comprising a plurality of the batteries according to claim 1 that are connected to each other.

14. An electronic device comprising the battery according to claim 1.

15. A method of manufacturing a battery comprising:

forming first and second housing portions having a substantially partial cylindrical shape and different depths extending in a same direction and arranged in a direction perpendicular to an extending direction on an outer package member having a film shape;
folding back the outer package member between the first and second housing portions and housing an electrode body having a substantially cylindrical shape in the first and second housing portions; and
sealing three sides of a periphery of a housing portion including the first and second housing portions excluding a folded portion provided on a peripheral surface side.

16. The method of manufacturing a battery according to claim 15, wherein both end sides of the housing portion are sealed, and then the peripheral surface side of the housing portion is sealed while deaerating an inside of the outer package member.

17. The method of manufacturing a battery according to claim 16, wherein a tensile force is applied to the outer package member so as to bring the electrode body into close contact with the outer package member when the peripheral surface side is sealed.

18. The method of manufacturing a battery according to claim 15, wherein

a first surface of the outer package member is pressed by first and second molded portions having a substantially partial cylindrical shape and different depths extending in a same direction and arranged in a direction perpendicular to an extending direction, and
a second surface of the outer package member is supported by a support member between the first and second molded portions, thereby deforming the outer package member.

19. The method of manufacturing a battery according to claim 18, wherein
a height of the first molded portion is higher than a height of the second molded portion, and
a width of the first molded portion is wider than a width of the second molded portion.

20. The method of manufacturing a battery according to claim 18, wherein a tip of the support member is located at a position displaced in a pressing direction with reference to a placement surface on which the outer package member is placed.

21. The method of manufacturing a battery according to claim 15, wherein a thickness of the support member is equal to or less than 10 times a thickness of the outer package member.

FIG. 1

A

B

C

FIG. 2

FIG. 3

A

FIG. 4

FIG. 5

FIG. 6

FIG. 7

FIG. 8

FIG. 9

A

B

C

FIG. 10

FIG. 11

A

B

FIG. 12

FIG. 13

FIG. 14

EP 3 386 018 A1

FIG. 15

FIG. 16

FIG. 17

400

300

301

302

331a

401

CHARGE/
DISCHARGE
CIRCUIT

ELECTRONIC
CIRCUIT OF
ELECTRONIC
DEVICE MAIN
BODY

331b

301a

## INTERNATIONAL SEARCH REPORT

| International application No. |
| --- |
| PCT/JP2017/000280 |

A. CLASSIFICATION OF SUBJECT MATTER
*H01M10/04*(2006.01)i, *H01M2/02*(2006.01)i, *H01M2/10*(2006.01)i, *H01M2/30* (2006.01)i, *H01M10/0587*(2010.01)n

According to International Patent Classification (IPC) or to both national classification and IPC

B. FIELDS SEARCHED

Minimum documentation searched (classification system followed by classification symbols)
H01M10/04, H01M2/02, H01M2/10, H01M2/30, H01M10/0587

Documentation searched other than minimum documentation to the extent that such documents are included in the fields searched
Jitsuyo Shinan Koho         1922-1996   Jitsuyo Shinan Toroku Koho   1996-2017
Kokai Jitsuyo Shinan Koho   1971-2017   Toroku Jitsuyo Shinan Koho   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2015-115293 A  (Sony Corp.),<br>22 June 2015 (22.06.2015),<br>claims 1, 13; paragraphs [0090], [0094]; fig.<br>13A to 13C, 19A to 19B, 20B<br>& US 2016/0260939 A1<br>claims 1, 15; paragraphs [0134], [0138]; fig.<br>13A to 13C, 19A to 19B, 20B<br>& WO 2015/087492 A1      & EP 3080857 A1<br>& CN 105765756 A | 1-16,18,21<br>17,19-20 |
| Y<br>A | JP 2000-12094 A  (Japan Storage Battery Co.,<br>Ltd.),<br>14 January 2000 (14.01.2000),<br>claim 1; paragraphs [0005] to [0006], [0008],<br>[0016]; fig. 1, 23 to 31<br>(Family: none) | 1-16,18,21<br>17,19-20 |

[×] Further documents are listed in the continuation of Box C.      [ ] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    28 March 2017 (28.03.17) | Date of mailing of the international search report<br>    11 April 2017 (11.04.17) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/000280

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2013-206678 A  (Sanyo Electric Co., Ltd.), 07 October 2013 (07.10.2013), claim 1; paragraphs [0003] to [0004], [0006], [0054] to [0055]; fig. 1 to 3, 5 (Family: none) | 18,21 |
| A | JP 2000-208110 A  (Matsushita Electric Industrial Co., Ltd.), 28 July 2000 (28.07.2000), paragraph [0019]; fig. 2, 4 to 5 (Family: none) | 1-21 |
| A | JP 2001-35465 A  (Toshiba Battery Co., Ltd.), 09 February 2001 (09.02.2001), paragraphs [0013] to [0014]; fig. 1 to 2 (Family: none) | 1-21 |
| A | JP 2015-153694 A  (Seiko Instruments Inc.), 24 August 2015 (24.08.2015), paragraph [0025]; fig. 1 & CN 104852012 A | 1-21 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11297280 A
- JP 2015115293 A